# EUROPEAN PATENT APPLICATION

(11) **EP 1 729 531 A1**
(43) Date of publication of application: **06.12.2006**
(21) Application number: 05291192.2
(22) Date of filing: 02.06.2005
(51) Int. Cl.: H04Q 7/36

(54) **Method and device for providing static beamforming**

(71) Applicant: ALCATEL, 75008 Paris (FR)
(72) Inventor: Braun, Volker, 70178 Stuttgart (DE); Hoek, Cornelis, 71732 Tamm (DE); Zeller, Dietrich, 71067 Sindelfingen (DE); Russ, Stefan, 73765 Neuhausen (DE)
(74) Representative: Richardt, Markus Albert

(57) **Abstract**

The invention relates to a method for providing a static beamforming in a wireless communication system, preferably a UMTS system.

The method is characterized in using an antenna arrangement of a base station which shapes at least one fixed beams, whereby the antenna arrangement covers at least two cells, each cell being covered by at least two beams. The at least two beams covering a cell use the same scrambling code and the same phase reference, whereby the base station autonomously decides which of the at least two fixed beams covering a cell should service a channel.

## Description

### Field of the invention

The invention relates to wireless communication systems, in particular WCDMA systems. More preferably, the invention refers to WCDMA systems using HSDPA.

### Background and prior art

In a UMTS (universal mobile telecommunication system) system a base station, also referred to a node B, communicates via the UTRAN air interface with a user equipment (UE). Typically each node B covers one or several cells, and the whole communication system is comprised of a multitude of cells. A radio network controller coordinates the services offered by the node B's of the communication system. One example for this coordination is that handovers from a first cell to a second cell are organized by the radio network controller.

One radio access technology for UMTS is WCDMA (wideband code division multiplexing access). The UTRA/FDD mode of WCDMA supports multiple antenna transmission techniques to enhance coverage, system throughput and spectral efficiency. Typically, two to four Tx antennas (transmit antennas) are used for each cell, whereby a doubling of the number of antennas within the cell yields a gain of three decibel. The use of multiple antenna transmission techniques improves the signal-to-noise ratio, improves the signal quality and decreases the amount of interference.

Document 3G TR 25.887 version 1.0.0 (12/2001) of the third generation partnership project (3GPP) differentiates between a flexible beamforming and beamforming with a grid of fixed beams. The latter kind of beamforming is also called static beamforming.

Flexible beamforming should be understood in the same way as it is defined in the above-mentioned 3GPP document. Flexible beamforming is performed by beamforming antennas where the uplink and the downlink beams are formed by the application of weight vectors to the received and transmitted signals to control the relative phase between the signals applied at the antenna elements. The weight vectors, and hence beam directions, are flexible.

Beamforming with a grid of fixed beams should also be understood in the same way as it is defined in the above-mentioned 3GPP document. In this case beamforming antennas are used where the uplink and the downlink beams are formed in such a way that the beam directions are fixed. This invention only refers to the case of beamforming with a grid of fixed beams. More particularly, the invention refers to downlink connections, i.e. concerns the beamforming for transmissions from the base station to the UE.

In a UMTS system the user equipment needs a phase reference such that it can establish a connection to the node B. If beamforming with a grid of fixed beams shall be performed the above-mentioned 3GPP document 3G TR 25.887 version 1.0.0 (12/2001) specifies two possibilities. A first possibility is that each beam has its own secondary common pilot channel (S-CPICH) serving as a phase reference. In the alternative the dedicated physical control channel (DPCCH) is used as a phase reference. In both cases, the radio network controller chooses which beam within a cell should service a user equipment, and the node B services the user equipment according to this decision of the radio network controller.

The approach suggested by the above-mentioned 3GPP document has several disadvantages. One disadvantage is that a higher layer of signalling is needed between the radio network controller and the node B. As an example less signals according to the network layer signalling protocol called Node B Application Part (NBAP) need to be exchanged. This signalling is specified in the document 3GPP TS 25.433 V 5.12.0 (2005-03) Release 5. Furthermore less radio resource control (RRC) signalling is necessary. This signalling is otherwise necessary in order to instruct the UE which beam should be selected. Another disadvantage is, that the approach leads to large delays in the beam switching of around one second which makes handovers more difficult.

### Summary of the invention

It is an object of the present invention to provide a method and a corresponding base station for beamforming with a grid of fixed beams which enables a faster beam switching within a cell while at the same time having less signalling between the base station and the radio network controller.

Another object of the invention is that the solution is compliant to the technical specification of 3GPP standard release 5.

Still another object of the invention is to increase the data rate in the case that HSDPA services.

This object and other objects are solved by the features of the independent claims. Further embodiments of the invention are described by the features of the dependent claims. It should be emphasized that any reference signs in the claims shall not be construed as limiting the scope of the invention.

A first aspect of the invention relates to a method for providing static beamforming in a wireless communication system. The method is thus a method for beamforming with a grid of fixed beams as defined by 3GPP document 3G TR 25.887 version 1.0.0 (12/2001). The method uses the antenna arrangement of a base station, in particular a node B in a UMTS system, to shape at least two fixed beams. Each beam thus has a spatially fixed beam direction such that a static beamforming is carried out. The antenna arrangement covers at least one cell of the communication system, such that the cell is covered by at least two beams. Furthermore the base station autonomously decides which of the at least two fixed beams covering a cell should service a terminal.

It has been found out that the disadvantages of the prior art mentioned above in the introductory part of the description stems from the fact that the radio network controller is involved in
a) the beam selection, i.e. the choice which beam within a cell should service a terminal which is located within said cell, and
b) handovers between a first beam and a second beam within a cell. This kind of handover will be called a beam handover within this description, in order to distinguish it from a handover which occurs when a terminal moves from a first cell to a second cell. The latter handover will be called a cell handover.

Due to this involvement of the radio network controller extra time is needed for signalling, namely for the exchange of information between the base station and the radio network controller.

As a consequence a method is suggested in which the base station autonomously decides which of the at least two fixed beams covering a cell should service a terminal. In this way the base station carries out the above-mentioned steps a) and b) without an involvement of the radio network controller.

For carrying out the beam selection according to case a) above the base station is adapted to identify the beam which services a terminal within its cell. For doing so the Node B can perform dedicated measurements related to the mobile terminals in each of the beams within a cell. For example if it detects that a terminal is received with a better quality in another beam as the one currently used for transmission, it may decide to transmit on this new beam instead of the current one.
If the terminal moves from the coverage area of a first beam to the coverage area of a second beam within the same cell this is detected by the base station as well. In this case the base station simply changes the beam for downlink transmissions from the first beam to the second beam. This concerns transmissions along all channels, particularly along DPCCH, DPDCH, HS-SCCH and HS-PDSCH channels.

A beam handover is carried out as follows: the Node B performs uplink measurements of the radio link quality and uses their results for beam selection. The decision upon the beam handover is taken by the base station alone, i.e. without an involvement of the radio network controller.

The suggested method provides the advantage that the beam switching delay is far shorter than in the prior art. With the invention the beam switching delay is between 50 and 100 milliseconds, in comparison to around one second in the prior art. Thus beam handovers can be carried out in a faster way which is particularly important in heterogeneous networks. Furthermore, a higher layer signalling between the base station and the radio network controller is reduced.

It should be emphasized that cell handovers are still performed by the radio network controller in the same way as it is done in the prior art. Thus downlink measurements are carried out by the terminal and their results are communicated via the base station to the radio network controller. Then the radio network controller decides upon the cell handover. In this way the present solution is compatible with the 3GPP standards mentioned above.

The antenna arrangement of the base station shapes a grid of fixed beams in the sense of document 3GPP TR25.887 version 5 (version 1.0.0, dated 12/2001). The invention thus uses at least two fixed beams, i.e. at least two spatially fixed beams shaped by the antenna arrangement. For that purpose a calibrated linear or circular antenna array can be used.

The antenna arrangement covers at least one cell. In this context the term "cell" is defined as a sector at a certain carrier frequency, whereby each cell has a dedicated scrambling code for downlink transmission. This definition is generally known from the UTRA/FDD mode of WCDMA.

In a preferred embodiment of the invention the at least two beams covering a cell use the same scrambling code. This has the advantage that the UE has not to be informed about a change of the scrambling code. This avoids higher layer signalling, namely NBAP and RRC signalling respectively, in the course of radio link reconfiguration type of procedures.

In a further preferred embodiment of the invention the at least two beams covering a cell use the same phase reference for downlink connections. The reason is that this avoids a situation in which the node B has to communicate the phase reference to the UE which would result in an increased overhead. One possibility for the provision of a single phase reference within a cell is the use of a single secondary common pilot channel (S-CPICH) for all beams covering a cell.

In a further preferred embodiment a downlink dedicated physical control channel (DPCCH) or a cell specific primary common pilot channel (P-CPICH) are used as a phase reference for terminals communicating with the base station. In these cases a beam-specific S-CPICH is neither used as a phase reference for the UE, nor shall it be configured, i.e. no S-CPICH is assigned per beam.

If a P-CPICH is used this channel might be an integral part of the beam shaped by the grid of fixed beams. In the alternative the P-CPICH can be provided by an additional cell beam. In the latter case the performance is better, e.g. the signal-to-noise ratio at a given bit-error-rate.

A preferred wireless communication system is a UMTS system using WCDMA as a radio access technology, more preferably a WCDMA system operating in the UTRA/FDD mode. In this case the base station is also called a node B, and the terminal a user equipment (UE).

In another preferred embodiment the wireless communication system is using high speed downlink packet access (HSDPA) as defined by the 3GPP Release 5 standards, whereby its antenna arrangement covers at least one cells. In this case the method described above reduces intra-cell interference which generally improves the throughput, and particularly increases the throughput in the HSDPA case due to the improved signal-to-noise ratio.

In another preferred embodiment a single secondary common pilot channel (S-CPICH) is used for all beams covering a cell. In this case the base station can autonomously decide which beam should service a user equipment, whereas the use of different S-CPICH would need the involvement of the radio network controller, whereby the radio network controller would decide which secondary common pilot channel should be used in order to service a user equipment. In this case a single S-CPICH for all beams covering a cell leads to less overhead for higher layer signalling.

According to a preferred embodiment of the invention data packets are simultaneously scheduled to terminals served by different beams within the cell. This limits mutual interference between these terminals, making it possible to reuse the same channelization code resources. In other words a space division multiple access (SDMA) can be used which increases the downlink cell throughput. The packet scheduler mentioned above will be implemented as an extension to the MAC-hs packet scheduler within the base station.

According to another aspect of the invention a base station is claimed which comprises a computer program product, said computer program product being directly loadable in the internal memory of the base station, and comprising software code portions for performing the method disclosed above. The computer program product is in this case a firmware of the base station, which is updated in order to implement the method according to the invention. It should be born in mind that the user equipment or the radio network controller needn't be changed for implementing the present invention.

### Brief description of the drawings

- Figure 1: shows a wireless communication system,
- Figure 2: shows the beam pattern according to the invention.

### Detailed description of the drawings and of the preferred embodiments

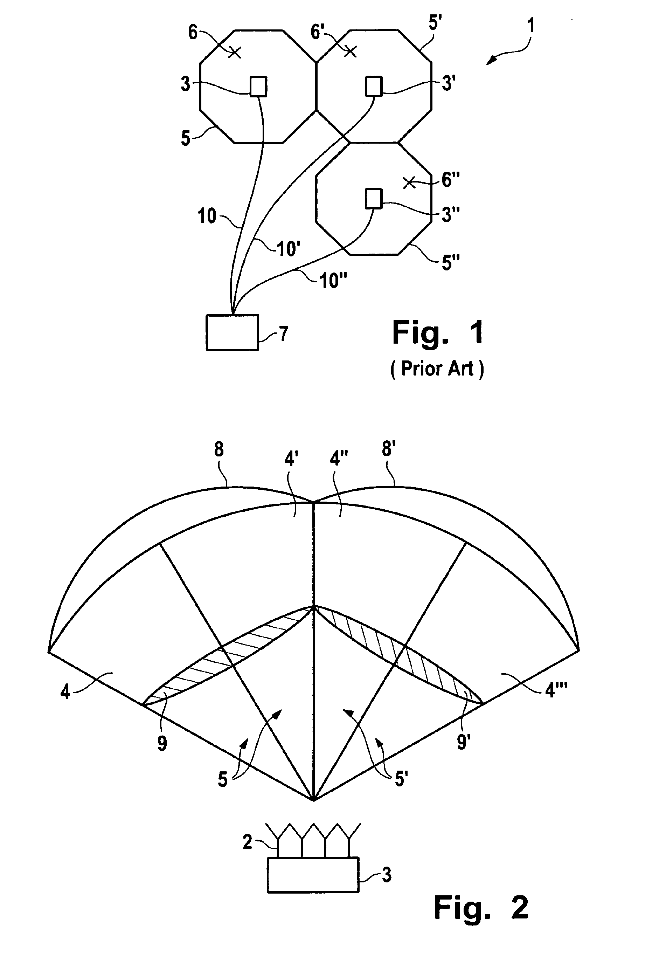

Figure 1 shows a UMTS system according to the prior art which uses WCDMA as a radio access technology. The UMTS system has a cell-like structure, whereby cells 5, 5' and 5" each have a single node B denoted by 3, 3' and 3" respectively. Node B 3 comprises a firmware, whereby said firmware is able to perform the method as described above.

Each node B 3, 3', 3" is connected to a radio network controller 7 via cables 10, 10',10". A cell handover, i.e. a handover from a first cell to a second cell, for example from cell 5 to cell 5', is performed by radio network controller 7. For that purpose user equipment 6 constantly measures the radio link quality and sends the data via node B 3 to radio network controller 7. If a terminal moves from cell 5 towards cell 5' it reaches the boundary region between these two cells in which the radio link quality from user equipment 6 to node B 3 deteriorates, whereas the radio link quality from user equipment 6' to node B 3' improves. Radio network controller 7 decides when a cell handover should be done and informs the node B's 3, 3' accordingly.

Figure 2 shows the beam pattern as obtained by the method described above.

A node B 3 has an antenna arrangement 2 consisting of four transmit (Tx) linear antennas. The node B 3 is arranged to operate in a UMTS system using WCDMA while operating in the UTRA/FDD mode. Furthermore, it is adapted to offer HSDPA services according to 3GPP Release 5.

The antenna arrangement shapes a total of four beams 4, 4', 4" and 4"'. Each beam has a beam width of 30° in azimuth. Two beams 4 and 4' cover a first cell 5, and the beams 4" and 4''' cover a second cell 5'. Thus the antenna arrangement covers two cells 5, 5', whereby each cell is covered by two beams.

Node B is arranged to decide which of the at least two fixed beams covering a single cell should service a terminal. It thus can decide whether beam 4 or beam 4' should service a terminal located in cell 5, and whether beam 4" or beam 4''' should service a terminal being located in cell 5'.

The static beamforming performed by the node B and its antenna arrangement 2 yielded a gain of 3 dB in comparison to a situation where a single beam is used for a cell. This reduces mutual interferences between user equipments in the system. Furthermore, the method reduces higher layer signalling as desired.

The beams 4 and 4' within the first cell 5 use the same scrambling code for user equipments located within their coverage area. Correspondingly cell 5' has a single cell-specific scrambling code for beams 4" and 4"'. Each of the cells 5, 5' of figure 2 uses a cell-specific P-CPICH being provided by additional cell beams 8 and 8' respectively.

It should be emphasised that a single S-CPICH is used for all beams covering a cell. Thus beams 4 and 4' use the same first S-CPICH. Furthermore the beams 4" and 4''' use the same S-CPICH.

If a user equipment moves within cell 5 from the coverage area of beam 4 to the coverage area of beam 4', the node B 3 autonomously arranges a beam handover. The same applies if a user equipment moves from the coverage area of beam 4" to the coverage area of beam 4"'. The beam switching delay is between 50 and 100 milliseconds, and thus far shorter than with an involvement of a radio network controller. However, if a user equipment moves from cell 5 to cell 5' a radio network controller (not shown) will decide upon the cell handover from cell 5 to cell 5'. In all cases the handover concerns transmissions along DPCCH, DPDCH, HS-SCCH and HS-PDSCH channels.

Data packets in the HSDPA mode are simultaneously scheduled to terminals served by different beams within the cell. This means that the two beams 4 and 4' use a single packet scheduler 9, and beams 4" and 4''' use a single packet scheduler 9'. This limits mutual interferences between user equipments in cell 5 and cell 5', making it possible to reuse the same channelisation code resources. In other words SDMA is implemented which requires extension to the MAC-hs packet scheduler to enable the spatial separation of the users and possibly code reuse.

### List of reference numerals

- 01: communication system
- 02: antenna arrangement
- 03: base station
- 03': base station
- 03": base station
- 04: beam
- 04': beam
- 04": beam
- 04''': beam
- 05: cell
- 05': cell
- 05": cell
- 6: terminal
- 6': terminal
- 6": terminal
- 7: radio network controller
- 8: cell beam
- 8': cell beam
- 9: packet scheduler
- 9': packet scheduler
- 10: cable
- 10': cable
- 10": cable

## Claims

1. Method for providing static beamforming in a wireless communication system (1),
whereby an antenna arrangement (2) of a base station (3) shapes at least two fixed beams (4,4',4",4"'),
whereby the antenna arrangement covers at least one cell (5,5'), the cell being covered by at least two beams,
and whereby the base station autonomously decides which of the at least two fixed beams covering a cell should service a terminal (6).

2. Method according to claim 1,
**characterized in that**
the at least two beams covering a cell use the same scrambling code.

3. Method according to claim 1,
**characterized in that**
that in at least two beams covering a cell the same phase reference is used for a user equipment.

4. Method according to claim 1,
**characterized in that**
the wireless communication system is a WCDMA system, preferably a WCDMA system operating in the UTRA/FDD mode.

5. Method according to claim 1,
**characterized in that**
the wireless communication system is adapted to provide HSDPA services.

6. Method according to claim 1,
**characterized in that**
a dedicated physical control channel (DPCCH) or a cell-specific primary common pilot channel (P-CPICH) are used as a phase reference for terminals communicating with the base station.

7. Method according to claim 1,
**characterized in that**
the cell-specific primary common pilot channel (P-CPICH) is provided by an additional cell beam.

8. Method according to claim 1,
**characterized in that**
a single secondary common pilot channel (S-CPICH) is used for all beams covering a cell.

9. Method according to claim 1,
**characterized in that**
that data packets are simultaneously scheduled to terminals served by different beams within a cell.

10. Base station, comprising a computer program product, said computer program product being directly loadable in the internal memory of the base station, and comprising software code portions for performing the method according to any of the claims 1 to 9.

11. Base station according to claim 10, **characterized in that** it is adapted to operate in the UTRA/FDD mode of WCDMA.

## Amended claims

### Amended claims in accordance with Rule 86(2) EPC.

**1.** Method for providing static beamforming in a wireless communication system (1), whereby an antenna arrangement (2) of a base station (3) shapes at least two fixed beams (4,4',4",4"'),
whereby the antenna arrangement covers at least one cell (5,5'), the cell being covered by at least two beams,
**characterized in that**
the at least two beams covering a cell use the same scrambling code, and
the base station autonomously decides which of the at least two beams covering a cell should service a wireless terminal (6).

**2.** Method according to claim 1,
**characterized in that**
in the at least two beams covering a cell the same phase reference is used for a user equipment.

**3.** Method according to claim 1,
**characterized in that**
the wireless communication system is a WCDMA system.

**4.** Method according to claim 1,
**characterized in that**
the wireless communication system is adapted to provide HSDPA services.

**5.** Method according to claim 1,
**characterized in that**
a dedicated physical control channel (DPCCH) or a cell-specific primary common pilot channel (P-CPICH) are used as a phase reference for wireless terminals communicating with the base station.

**6.** Method according to claim 1,
**characterized in that**
the cell-specific primary common pilot channel (P-CPICH) is provided by an additional cell beam.

**7.** Method according to claim 1,
**characterized in that**
a single secondary common pilot channel (S-CPICH) is used for all beams covering a cell.

**8.** Method according to claim 1,
**characterized in that**
data packets are simultaneously scheduled to wireless terminals served by different beams within a cell.

**9.** Base station, comprising means for performing the method according to any of the claims 1 to 8.

**10.** Base station according to claim 9,
**characterized in that**
it is adapted to operate in the UTRA/FDD mode of WCDMA.
